# EUROPÄISCHE PATENTANMELDUNG

(11) **EP 4 015 580 A1**
(43) Veröffentlichungstag der Anmeldung: **22.06.2022**
(21) Anmeldenummer: 20215265.8
(22) Anmeldetag: 18.12.2020
(51) Int. Cl.: C08L 69/00

(54) **ZUSAMMENSETZUNG UND VERFAHREN ZUR HERSTELLUNG EINER TRANSLUZENTEN THERMOPLASTISCHEN POLYCARBONAT/POLYMETHYLMETHACRYLAT-FORMMASSE**

(71) Anmelder: Covestro Deutschland AG, 51373 Leverkusen (DE)
(72) Erfinder: Seidel, Andreas, 41542 Dormagen (DE); Gieler, Mandy, 53507 Dernau (DE); Bubmann, M. Sc. Tobias, 95444 Bayreuth (DE); Altstädt, Volker, 20099 Hamburg (DE)
(74) Vertreter: Levpat

(57) **Zusammenfassung**

Die vorliegende Erfindung betrifft eine Zusammensetzung zur Herstellung einer thermoplastischen Formmasse enthaltend
A) mindestens ein aromatisches Polycarbonat und/oder aromatisches Polyestercarbonat enthaltend mindestens 500 Gew.-ppm phenolische OH Gruppen, wobei das gewichtsgemittelte Molekulargewicht M_{w}, ermittelt per Gelpermeationschromatographie bei Raumtemperatur in Dichlormethan als Lösungsmittel mit einem Polycarbonat-Kalibrierungsstandard, der Komponente A im Bereich von 15000 bis 40000 g/mol liegt.
B) mindestens ein Copolymer enthaltend Struktureinheiten abgeleitet von Methylmethacrylat und 0,3 bis 15 Gew.-% bezogen auf die Komponente B, Struktureinheiten abgeleitet von Glycidylmethacrylat, wobei die Komponente B ein gewichtsgemitteltes Molekulargewicht M_{w}, ermittelt mittels Gelpermeationschromatographie bei Raumtemperatur in Tetrahydrofuran als Lösungsmittel mit einem Polystyrol-Standard, von 20000 bis 200000 g/mol aufweist,
wobei in der Komponente B das Verhältnis von M_{w} in kg/mol zum Gewichtsanteil an vom Glycidylmethacrylat abgeleiteten Struktureinheiten in Gew.-% im Bereich von 2 bis 100 liegt,
wobei das Gewichtsverhältnis der Komponente A und Komponente B im Bereich von 30:70 bis 90:10 liegt,
sowie ein Verfahren zur Herstellung einer Formmasse aus der Zusammensetzung, eine Formmasse erhältlich nach dem Verfahren, die Verwendung der Formmasse zur Herstellung von Formkörpern, die Formkörper selbst sowie ein Verfahren zur Herstellung der Formkörper.

## Beschreibung

Die vorliegende Erfindung betrifft eine Polycarbonat/Polymethylmethacrylat-Zusammensetzung zur Herstellung einer thermoplastischen Polycarbonat/Polymethylmethacrylat-Formmasse, ein Verfahren zur Herstellung der Formmasse, die Formmasse selbst, die Verwendung der Formmasse zur Herstellung von Formkörpern, die Formkörper enthaltend eine solche Formmasse sowie ein Verfahren zur Herstellung von Formkörpern.

Nicht zuletzt getrieben durch die Entwicklung der LED-Lichtquellen-Technologie und sich daraus ergebender neuer Beleuchtungs- und Funktionsintegrationskonzepte haben transparente und transluzente thermoplastische Formmassen, welche sich zur Herstellung von mittels sichtbarem Licht durchleuchtbaren Formkörpern eignen, in vielen Anwendungsbereichen, beispielsweise im Automobilbereich, im Bausektor und im Elektronikbereich, in den letzten Jahren zunehmend an Bedeutung gewonnen.

Das Eigenschaftsprofil traditioneller transparenter thermoplastischer Polymer-Werkstoffe wie Polycarbonat (PC) und Polymethylmethacrylat (PMMA) stößt bei vielen dieser neuen Anwendungen zunehmend auf technische Grenzen. Beispielsweise wird bei durchleuchtbaren Bauteilen im Automobilinnenraum wie beispielsweise Instrumententafelträgern oder Zierblenden oder in automobilen Karosserieanwendungen, welche beispielsweise einer ambienten Beleuchtung oder bedarfsgerecht schaltbaren Funktionsanzeige dienen sollen, oft eine gegenüber PMMA verbesserte Materialduktilität sowie eine gegenüber PC verbesserte Kratzfestigkeit oder Sonnenmilchbeständigkeit gefordert. Für den Fachmann ist es insofern naheliegend, sich der Polymerblend-Technologie zu bedienen, um die individuellen Vorteile dieser beiden Werkstoffe (einerseits hohe Kratzfestigkeit und gute Sonnenmilchbeständigkeit von PMMA sowie hohe Duktilität von PC andererseits) miteinander zu kombinieren.

Die Eigenschaften solcher PC/PMMA-Blend-Formmassen und der daraus hergestellten Formkörper lassen sich durch geeignete Wahl ihrer Zusammensetzung und Herstellbedingungen in weiten Bereichen variieren und an die Anforderungen der jeweiligen Anwendung anpassen. Dadurch lassen sich Formmassen mit einer Vielzahl von Eigenschaftsprofilen realisieren, die im Wesentlichen oft zwischen denen von reinem PC und denen von reinem PMMA liegen.

Dieses gilt jedoch grundsätzlich nicht für die Transparenz. Da PC- und PMMA-Schmelzen nicht vollständig mischbar sind, bilden sich bei der Compoundierung von PC/PMMA-Blends in der Regel zweiphasige Morphologien aus, in denen das Polymer, welches im Überschuss eingesetzt wird, die Matrixphase bildet, in der das jeweils andere Polymer relativ fein verteilt und dadurch mit einer Vielzahl von mikroskopischen Phasengrenzflächen vorliegt. An diesen PC-PMMA-Phasengrenzflächen wird eingestrahltes Licht aufgrund der unterschiedlichen Brechungsindices der beiden Polymere gestreut.

Das Ergebnis ist eine hohe Opazität (das heißt sehr geringe Lichttransmission) der PC/PMMA-Blends verglichen mit den beiden polymeren Blendpartnern.

Weiterhin können die Phasengrenzflächen hinsichtlich mechanischer Belastungen Schwachpunkte darstellen. Diese Phasengrenzflächen können etwa zum Versagen gegenüber von außen auf den Formkörper wirkenden Spannungen führen, insbesondere, wenn der Formkörper in Kontakt mit gewissen Medien wie Fetten oder Ölen steht, welche Bestandteile von Lebensmitteln, Schmierstoffen oder kosmetischen Produkten (wie beispielsweise Hand- oder Sonnencremes) sind.

Ein bisher unzureichend gelöstes Ziel in der Werkstoffentwicklung war es somit, PC/PMMA-Blends bereitzustellen, die sich über ein thermoplastisches Umformverfahren zur Herstellung von transparenten oder transluzenten (d.h. durchleuchtbaren) Formkörpern eignen, und die gegenüber Polycarbonat und Polymethylmethacrylat jeweils eine vorteilhafte Kombination hinsichtlich der oben genannten Eigenschaften aufweisen. Damit ließen sich eine Vielzahl technischer Aufgabenstellungen lösen.

In verschiedenen wissenschaftlichen Publikationen und Patentdokumenten der letzten 10 Jahren wurde offenbart, dass durch Verwendung von Blockcopolymeren, die oft in-situ in einer Reaktivextrusion gebildet werden können, transparente PC/PMMA-Blends mit verbesserten technischen Eigenschaften darstellbar seien.

WO 2020/212229 A1 offenbart ein Reaktivcompoundierungsverfahren zur Herstellung einer thermoplastischen Formmasse unter Einsatz von aromatischem Polycarbonat und einem weiteren Polymer, welches mindestens eine Art funktioneller Gruppen ausgewählt aus Ester-, Epoxy-, Hydroxy-, Carboxy- und Carbonsäureanhydrid-Gruppen enthält, wobei als Katalysator ein spezielles Phosphoniumsalz eingesetzt wird. Die Anmeldung offenbart insbesondere auch die Herstellung transparenter thermoplastischer PC/PMMA-Formmassen in einem solchen Verfahren.

WO 2016/138246 A1 offenbart transparente PC/PMMA-Blends enthaltend 9,9 - 40 Gew.-% Polycarbonat und 59,9 - 90 Gew.-% PMMA, welche in einer Schmelzextrusion unter Einsatz von 0,0025 - 0,1 Gew.-% eines Zinn-Katalysators hergestellt werden.

WO 2016/189494 A1 offenbart transparente PC/PMMA-Blends enthaltend 80 - 95 Gew.-% eines speziell spezifizierten verzweigten Polycarbonats mit einem End-Cap-Gehalt von 45% - 80% und 4,9 - 20 Gew.-% PMMA, welche in einer Schmelzextrusion durch Umesterung unter Einsatz von 0,1 - 1,5 Gew.-% eines Katalysators, bevorzugt ausgewählt aus Zn-, Sn- und Ag-Verbindungen hergestellt werden.

A.K. Singh, et al. "Reactive Compatibilization of Polycarbonate and Poly(methyl)methacrylate in the Presence of a Novel Transesterification Catalyst SnCl2·2H2O", J. Phys. Chem. B 2011, 115, 1601-1607 offenbart transparente PC/PMMA-Formmassen hergestellt in einem Reaktivextrusionsverfahren unter Verwendung von SnCl₂·2H₂O als Katalysator.

A.K. Singh, et al. "Evidence for in situ graft copolymer formation and compatibilization of PC and PMMA during reactive extrusion processing in the presence of the novel organometallic transesterification catalyst tin(II) 2-ethylhexanoate", RSC Advances, 2012, 2, 10316-10323 offenbart transluzente PC/PMMA-Formmassen hergestellt in einem Reaktivextrusionsverfahren unter Verwendung von Zinn(II)-2-ethylhexanoat als Katalysator.

T. Bubmann et al. "Transparent PC/PMMA Blends Via Reactive Compatibilization in a Twin-Screw Extruder" Polymers 2019, 11, 2070 offenbart, dass solche PC+PMMA-Formmassen hergestellt in Reaktivextrusionsverfahren gemäß dem zuvor zitierten Stand der Technik bedingt durch eine interpolymere Umesterungsreaktion und somit Bildung von PC-g-PMMA-Pfropfpolymeren während der Reaktivextrusion zwar transparent sind, jedoch für jegliche industrielle Anwendung unzureichende Materialduktilität aufweisen. Als Grund hierfür wird die mit der Umesterung einhergehende Molekulargewichtsreduktion des Polycarbonats aufgezeigt, welche maßgeblich auch zur Ausbildung der Transparenz in den derartig hergestellten Blends beiträgt, da sich die Mischbarkeit von PC und PMMA mit abnehmendem PC-Molekulargewicht verbessert und dadurch in den reaktivextrudierten Blends einphasige Phasenmorphologien resultieren.

US 8,975,346 B2 offenbart ein Verfahren zur Herstellung eines Blockcopolymers, bei dem ein aromatisches PC mit endständigen OH-Gruppen und mit einem gewichtsgemittelten Molekulargewicht von mindestens 3400 g/mol mit einem Säurehalogenid unter Bildung eines Makroinitiators verestert und dieser so hergestellt Polycarbonat-Makroinitiator mit einem Vinylmonomer, insbesondere Methylmethacrylat, in einer kontrollierten radikalischen Atomtransferpolymerisationsreaktion umgesetzt wird. Die so hergestellten PC-b-PMMA-Blockcopolymere zeichnen sich durch Transparenz und gute Kratzfestigkeit aus.

E.A. Kang, et al. "The effects of PC-PMMA-block copolymer on the compatibility and interfacial properties of PC/SAN blends", Polymer Engineering and Science, 2000, 40 (11), 2374-2384 offenbart PC-b-PMMA- und PC-b-SAN-Blockcopolymere, welche durch freie radikalischen Polymerisation von Methylmethacrylat bzw. einer Styrol/Acrylnitril-Mischung in Anwesenheit eines vinylterminierten PC in Chloroform als Lösungsmittel hergestellt wurden.

H. Jang, et al. "Polycarbonate-co-PMMA block copolymers via atom transfer radical polymerization reaction" J. Nanosci. Nanotechnol., 2017, 17 (10), 7281-7386 offenbart PC-b-PMMA-Blockcopolymere, welche durch radikalische Polymerization von Methylmethacrylat in Anwesenheit eines allylterminierten PCs in Tetrahydrofuran als Lösungsmittel hergestellt wurden. Die Blockcopolymere weisen eine gegenüber PC verbesserte Kratzfestigkeit auf.

Die in den drei zuletzt aufgeführten Dokumenten des Standes der Technik offenbarten Prozesse, die sich der Aufpfropfung von PMMA auf speziell reaktiv modifizierten Polycarbonat-Makromonomeren in (kontrollierten) radikalischen Polymerisationsverfahren bedienen, sind technologisch aufwändig, wenig effizient, teuer und industriell schwierig umzusetzen.

Es war daher wünschenswert, eine Zusammensetzung zur Erzeugung einer thermoplastischen PC/PMMA-Formmasse bereitzustellen, wobei die Herstellung der Formmasse mit einem handelsüblichen und industriell etablierten Compoundierungsaggregat wie beispielsweise einem Einwellenextruder, gleichläufigen oder gegenläufigen Doppelwellenextruder, Planetwalzenextruder, Innenkneter oder Ko-Kneter möglich ist, und wobei sich aus der Formmasse durchleuchtbare (transluzente oder transparente) Formkörper mit mindestens einer gegenüber solchen PC/PMMA-Formmassen des Standes der Technik verbesserten mechanischen Eigenschaft herstellen lassen. Als mechanische Eigenschaften, deren Verbesserung im Rahmen der Erfindung anzustreben war, sind dabei insbesondere die Zugfestigkeit, Biegefestigkeit, Biegedehnung bei Bruch, Kratzfestigkeit und Chemikalienbeständigkeit zu nennen.

Unter einem durchleuchtbaren Formkörper wird im Rahmen der vorliegenden Anmeldung ein solcher Formkörper verstanden, der an mindestens einer Stelle einen örtlichen Gesamtlichttransmissionsgrad gemessen gemäß ISO 13468-1 (Version von 2019) von mindestens 35%, bevorzugt mindestens 50 %, aufweist.

Es war weiterhin wünschenswert, Zusammensetzungen zur Erzeugung von PC/PMMA-Formmassen bereitzustellen, die sich zur Herstellung von durchleuchtbaren Formkörper mit sowohl gegenüber reinem PC als auch reinem PMMA verbesserten Biegefestigkeit auszeichnen. Insbesondere wird eine Biegefestigkeit gemessen nach ISO 178 (Version von 2019) von mindestens 100 MPa angestrebt.

Bevorzugt sollen die hergestellten Formkörper eine gegenüber reinem Polycarbonat verbesserte Kratzfestigkeit und/oder eine gegenüber reinem Polycarbonat und/oder PC/PMMA-Zusammensetzungen gemäß dem Stand der Technik verbesserte Beständigkeit gegenüber Fetten und Ölen und/oder Fette und/oder Öle enthaltende Zusammensetzungen wie beispielswiese Kosmetika, Handcremes und Sonnenmilch aufweisen. Insbesondere wird eine Kratzfestigkeit gemessen als Bleistifthärte in Anlehnung an das Verfahren von Wolff-Wilbom von mindestens 2H angestrebt. Weiterhin wird insbesondere eine Verbesserung der Beständigkeit gegenüber Sonnenmilch verglichen mit reinem Polycarbonat angestrebt.

Es war besonders wünschenswert, Zusammensetzungen zur Erzeugung von PC/PMMA-Formmassen bereitzustellen, die sich zur Herstellung von durchleuchtbaren Formkörper mit einer Biegefestigkeit gemessen nach ISO 178 (Version von 2019) von mindestens 100 MPa, einer Kratzfestigkeit gemessen als Bleistifthärte in Anlehnung an das Verfahren von Wolff-Wilbom von mindestens 2H, bevorzugt mindestens 3H sowie einer verglichen mit reinem Polycarbonat verbesserten Beständigkeit gegenüber Sonnenmilch eignen, wobei ein Formkörper mit einer Dicke von 1 mm hergestellt aus einer solchen Formmasse einen Gesamtlichttransmissionsgrad gemessen gemäß ISO 13468-1 (Version von 2019) von mindestens 35%, bevorzugt mindestens 50 % aufweist.

Überraschend wurde nun gefunden, dass eine Zusammensetzung zur Herstellung einer thermoplastischen Formmasse enthaltend
A) mindestens ein aromatisches Polycarbonat und/oder aromatisches Polyestercarbonat enthaltend mindestens 500 Gew.-ppm, bevorzugt mindestens 1000 Gew.-ppm, besonders bevorzugt mindestens 1500 Gew.-ppm, am meisten bevorzugt mindestens 1800 Gew.-ppm phenolische OH Gruppen, wobei das gewichtsgemittelte Molekulargewicht M_{w}, ermittelt per Gelpermeationschromatographie bei Raumtemperatur in Dichlormethan als Lösungsmittel mit einem BPA-Polycarbonat-Kalibrierungsstandard, der Komponente A im Bereich von 15000 bis 40000 g/mol, bevorzugt von 18000 bis 35000 g/mol, besonders bevorzugt von 19000 bis 30000 g/mol, am meisten bevorzugt von 20000 bis 28000 g/mol liegt,
B) mindestens ein Copolymer enthaltend Struktureinheiten abgeleitet von Methylmethacrylat und 0,3 bis 15 Gew.-%, bevorzugt 0,5 bis 10 Gew.-%, besonders bevorzugt 0,8 bis 9 Gew.-%, am meisten bevorzugt 1 bis 8 Gew.-% bezogen auf die Komponente B, Struktureinheiten abgeleitet von Glycidylmethacrylat (GMA), wobei die Komponente B ein gewichtsgemitteltes Molekulargewicht M_{w}, ermittelt mittels Gelpermeationschromatographie bei Raumtemperatur in Tetrahydrofuran als Lösungsmittel mit einem Polystryol-Standard, von 20000 bis 200000 g/mol, bevorzugt von 30000 bis 150000 g/mol, besonders bevorzugt von 30000 bis 100000 g/mol, am meisten bevorzugt von 50000 bis 80000 g/mol aufweist,
   wobei in der Komponente B das Verhältnis von M_{w} in kg/mol zum Gewichtsanteil an von Glycidylmethacrylat abgeleiteten Struktureinheiten in Gew.-% im Bereich von 2 bis 100, bevorzugt im Bereich von 5 bis 80, besonders bevorzugt im Bereich von 5 bis 50, am meisten bevorzugt im Bereich von 8 bis 30 liegt,
wobei das Gewichtsverhältnis der Komponenten A und B im Bereich von 30:70 bis 90:10, bevorzugt im Bereich von 45:55 bis 85:15, weiter bevorzugt im Bereich von 60:40 bis 85:15 liegt,
die gewünschten Eigenschaften aufweist.

Dabei bedeutet Gew.-ppm einen Gewichtsanteil in Teile pro Million.

In bevorzugter Ausführungsform besteht die Zusammensetzung aus
30 bis 90 Gew.-%, bevorzugt 45 bis 85 Gew.-%, besonders bevorzugt 58 bis 82 Gew.-% der Komponente A,
10 bis 70 Gew.-%, bevorzugt 14 bis 54 Gew.-%, besonders bevorzugt 17 bis 41 Gew.-% der Komponenten B,
0 bis 20 Gew.-%, bevorzugt 0,01 bis 5 Gew.-%, besonders bevorzugt 0,02 bis 1 Gew.-% als Komponente C Polymeradditive, Prozesshilfsstoffe und/oder von den Komponenten A und B verschiedene Polymere, wobei die Gew.-% der Komponenten A bis C so gewählt sind, dass sie sich zu 100 Gew.-% summieren.

In einer weiteren bevorzugten Ausführungsform ist das Produkt aus der phenolischen OH-Menge in Gew.-ppm, die über die Komponente A in die Zusammensetzung eingetragen wird, und der Menge an von Glycidylmethacrylat abgeleiteten Struktureinheiten in Gew.-%, die über die Komponente B in die Zusammensetzung eingetragen wird, größer als 300. Dieses Produkt berechnet sich als Produkt der Menge an phenolischem OH in Komponente A (in ppm), dem Gewichtsanteil an Komponente A in der Zusammensetzung, der Menge an von Glycidylmethacrylat abgeleiteten Struktureinheiten in Komponente B (in Gew.-%) und dem Gewichtsanteil der Komponente B in der Zusammensetzung.

Bei Zusammensetzungen enthaltend eine Komponente B mit einem Verhältnis von Mw in kg/mol zum Gewichtsanteil an von Glycidylmethacrylat abgeleiteten Struktureinheiten in Gew.-% von >50 bis 100 ist es zwecks Erzielung einer höheren Transmission bevorzugt als Komponente C oder Bestandteil der Komponente C ein Metall-Acetonat, bevorzugt Zirkonium(IV)-Acetylacetonat einzusetzen. Bei Zusammensetzungen enthaltend eine Komponente B mit einem Verhältnis von Mw in kg/mol zum Gewichtsanteil an von Glycidylmethacrylat abgeleiteten Struktureinheiten in Gew.-% von ≤ 50 dagegen ist ein solcher Einsatz eines Metall-Acetonats nicht zur Erzielung einer hohen Transmission erforderlich, bei Zusammensetzungen mit einem hohen PMMA-Anteil >40 Gew.-% ist es sogar zur Erzielung einer hohen Transmission bevorzugt, kein solches Metall-Acetonat einzusetzen. Sofern Metall-Acetonat als Komponente C oder Bestandteil der Komponente C eingesetzt wird, kommt dieses in den Zusammensetzungen bevorzugt in einer Menge von 0,01 bis 0,2 Gew.-%, besonders bevorzugt von 0,02 bis 0,15 Gew.-%, am meisten bevorzugt in einer Menge von 0,03 bis 0,1 Gew.-% zum Einsatz.

### Komponente A

Als Komponente A kommt ein aromatisches Polycarbonat und/oder ein aromatisches Polyestercarbonat zum Einsatz. Es können auch Mischungen von mehreren aromatischen Polycarbonaten und/oder Polyestercarbonaten eingesetzt werden.

Erfindungsgemäß geeignete aromatische Polycarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat in Anwesenheit eines Umesterungskatalysators möglich.

Das Schmelzepolymerisationsverfahren ist zur Herstellung der Polycarbonate gemäß der erfindungsgemäßen Komponente A besonders geeignet. Insofern kommen als Komponente A bevorzugt solche aromatischen Polycarbonate zum Einsatz, die im Schmelzepolymerisationsverfahren hergestellt wurden. Das Molekulargewicht sowie der Anteil an phenolischen OH-Endgruppen wird dabei insbesondere durch das Verhältnis von Diphenolen und Diphenylcarbonat und der Reaktionsführung (insbesondere Temperatur, Verweilzeiten, Vakuum, sowie Katalysatorart- und -menge) eingestellt. Das molare Verhältnis an Diphenylcarbonat zu Diphenolen wird dabei bevorzugt im Bereich 1,00 bis 1,07, besonders bevorzugt im Bereich 1,01 bis 1,05, am meisten bevorzugt im Bereich 1,02 bis 1,04 eingestellt. Dieses Verhältnis reguliert die Korrelation zwischen den Molekulargewichten und dem Anteil der phenolischen OH-Endgruppen, wobei sich die Molekulargewichte (und damit auch der Anteil der phenolischen OH-Endgruppen) durch die Verweilzeiten bei gewählter Reaktionsführung (wie Temperatur, Vakuum, sowie Katalysatorart- und -menge) innerhalb dieser Korrelation einstellen lassen.

Bei der Herstellung von Polycarbonaten gemäß Komponente A im Phasengrenzflächenverfahren wird im molaren Überschuss von Diphenolen relativ zum Kohlensäurechlorid gearbeitet. Das Zielmolekulargewicht wird dabei über das Verhältnis von Diphenolen und Kohlensäurehalogenid eingestellt. Der Gehalt an phenolischen OH-Endgruppen lässt sich in diesem Fall steuern über das molare Verhältnis an monophenolischem Kettenabbrecher zu Diphenol. In einer speziellen Ausführungsform wird bei der Herstellung von Polycarbonaten gemäß Komponente A im Phasengrenzflächenverfahren kein monophenolischer Kettenabbrecher eingesetzt. Dabei entsteht ein Polycarbonat, mit einem Anteil der phenolischen OH-Gruppen an den Endgruppen im Polycarbonat von 100%.

Diphenole zur Herstellung der aromatischen Polycarbonate und/oder aromatischen Polyestercarbonate sind vorzugsweise solche der Formel (1) 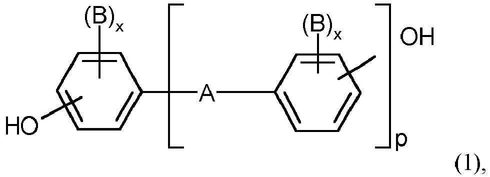 wobei
A eine Einfachbindung, C₁ bis C₅-Alkylen, C₂ bis Cs-Alkyliden, C₅ bis C₆-Cycloalkyliden, -O-, - SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (2) oder (3) 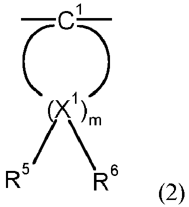 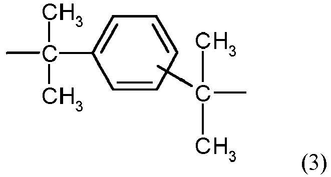
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α,-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

In bevorzugter Ausführungsform beträgt der Anteil von Bisphenol-A, bezogen auf die Summe aller zur Herstellung der Komponente A verwendeten Diphenole, mindestens 50 mol-%, besonders bevorzugt mindestens 75 mol-%, am meisten bevorzugt mindestens 95 mol-%. Am stärksten bevorzugt wird bei der Herstellung der Komponente A ausschließlich Bisphenol-A als Diphenol eingesetzt.

Die aromatischen Polycarbonate enthalten mindestens 500 Gew.-ppm, bevorzugt mindestens 1000 Gew.-ppm, besonders bevorzugt mindestens 1500 Gew.-ppm, am meisten bevorzugt mindestens 1800 Gew.-ppm phenolische OH-Gruppen. Bei diesen phenolischen OH-Gruppen handelt es sich um Endgruppen. Bei den aromatischen Polycarbonaten gemäß Komponente A handelt es sich, sofern es sich um lineare Polycarbonate handelt, in der Regel um Mischungen aus solchen Polycarbonatmolekülen mit einer, zwei und keiner phenolischen OH-Gruppe. Bei verzweigten Polycarbonaten können auch Polycarbonatmoleküle mit mehr als zwei phenolischen OH-Gruppen enthalten sein. In bevorzugter Ausführungsform liegen in den Polymermolekülen der Komponente A 25 bis 100 mol-%, besonders bevorzugt 30 bis 80 mol-%, am meisten bevorzugt 40 bis 75 mol-% der Endgruppen als phenolische OH-Gruppen vor. Der Anteil der phenolischen OH-Gruppen an den Endgruppen in linearen Polycarbonaten lässt sich mittels eines Dreisatzes aus dem zahlengemittelten Molekulargewicht des Polycarbonats Mₙ (in g/mol) und seinem Gehalt an phenolischen OH-Gruppen (in Gew.-ppm) ermitteln, wobei ein Gehalt an phenolischen OH-Gruppen (in Gew.-ppm) von (34 g/mol)- 10⁶/Mₙ einem Anteil phenolischer OH-Gruppen von 100 % entspricht.

Weiter bevorzugt enthalten die aromatischen Polycarbonate 500 Gew.-ppm bis 3000 Gew.-ppm, besonders bevorzugt 1500 Gew.-ppm bis 3000 Gew.-ppm und am meisten bevorzugt 1800 bis 2800 ppm phenolische OH-Gruppen.

Der Gehalt an phenolischen OH-Gruppen wird mittels ¹H NMR-Spektroskopie mit Dichlormethan als Lösungsmittel bei Raumtemperatur unter Auswertung des Verhältnisses der Integrale der Signale bei 6,68 ppm (2 aromatische Protonen ortho-ständig zu phenolischen-OH Gruppen) und bei 1,68 ppm (6 Methylprotonen der Bisphenol-A Einheit) ermittelt.

Soweit nicht ausdrücklich anders beschrieben, sind alle ppm Mengen in der vorliegenden Erfindung als Gewichtsanteile zu verstehen.

Für die Herstellung der aromatischen Polycarbonate im Phasengrenzflächenverfahren geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-isoOctylphenol, p-tert.-Octylphenol, p-Dodecylphenol und 2-(3,5-Dimethylheptyl)-phenol und 4-(3,5-Dimethylheptyl )-phenol.

Die aromatischen Polycarbonate haben gewichtsgemittelte Molekulargewichte M_{w}, gemessen durch GPC (Gelpermeationschromatographie) bei Raumtemperatur in Methlylenchlorid mit BPA-Polycarbonat-Standard), von 15000 bis 40000 g/mol, bevorzugt von 18000 bis 35000 g/mol, besonders bevorzugt von 19000 bis 30000 g/mol und am meisten bevorzugt von 20000 bis 28000 g/mol.

Die aromatischen Polycarbonate können in bekannter Weise verzweigt sein, und zwar vorzugsweise durch den Einbau von 0,01 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Bevorzugt werden lineare aromatische Polycarbonate, weiter bevorzugt lineare aromatische Polycarbonate auf Basis von Bisphenol-A, besonders bevorzugt ausschließlich auf Basis von Bisphenol-A eingesetzt.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C1 bis C22-Alkylgruppen oder durch Halogenatome substituiert sein können, sowie aliphatische C2 bis C22-Monocarbonsäurechloride in Betracht.

Bei der Herstellung von aromatischen Polyestercarbonaten kann zusätzlich eine oder mehrere aromatische Hydroxycarbonsäuren eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercarbonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 2,0 Mol% bezogen auf die eingesetzten Dicarbonsäuredichloride oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, l,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihy-droxyphenyl)-propan, Tetra-(4-[4-hydroxphenyl-isopropyl]-phenoxy)-methan, 1,4-Bis[4,4'-dihydroxytri-phenyl)-methyl]-benzol, in Mengen von 0,01 bis 2,0 Mol% bezogen auf die eingesetzten Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Am meisten bevorzugt werden als Komponente A ausschließlich lineare aromatische Polycarbonate auf Basis von Bisphenol-A, besonders bevorzugt ausschließlich auf Basis von Bisphenol-A eingesetzt.

### Komponente B

Bei der Komponente B handelt es sich um ein Copolymer enthaltend Struktureinheiten abgeleitet von Methylmethacrylat und 0,3 bis 15 Gew.-%, bevorzugt 0,5 bis 10 Gew.-%, besonders bevorzugt 0,8 bis 9 Gew.-%, am meisten bevorzugt 1 bis 8 Gew.-% Struktureinheiten abgeleitet von Glycidylmethacrylat (GMA). Es können auch Mischungen solcher Copolymere eingesetzt werden.

Der Ausdruck "Copolymer enthaltend Struktureinheiten abgeleitet von" bedeutet, dass das Copolymer aus den genannten Monomeren durch Copolymerisation hergestellt wird.

Die Komponente B weist ein gewichtsgemitteltes Molekulargewicht M_{w} bestimmt mittels Gelpermeationschromatographie bei Raumtemperatur in Tetrahydrofuran als Lösungsmittel mit einem Polystyrol-Standard von 20000 bis 200000 g/mol, bevorzugt von 30000 bis 150000 g/mol, besonders bevorzugt von 30000 bis 100000 g/mol, am meisten bevorzugt von 50000 bis 80000 g/mol auf.

In der Komponente B liegt das Verhältnis von M_{w} in kg/mol zum Gewichtsanteil an von Glycidylmethacrylat abgeleiteten Struktureinheiten in Gew.-% im Bereich von 2 bis 100, bevorzugt im Bereich von 5 bis 80, besonders bevorzugt im Bereich von 5 bis 50 und am meisten bevorzugt im Bereich von 8 bis 30.

Die Copolymere gemäß Komponente B können bis zu 50 Gew.-%, bevorzugt bis zu 25 Gew.-%, besonders bevorzugt bis zu 10 Gew.-% von weiteren copolymerisierbaren vinylischen, bevorzugt acrylischen (d.h. Acrylgruppen enthaltende) Monomeren abgeleitete Struktureinheiten enthalten. Als copolymerisierbare acrylische Monomere kommen beispielsweise in Frage Methylacrylat, Ethylacrylat, Propylacrylat, Butylacrylat, Hexylacrylat, 2-Ethylhexylacrylat, Butylmethacrylat und andere, zu diesen genannten Acrylaten strukturverwandte Verbindungen.

In am stärksten bevorzugter Ausführungsform enthält Komponente B keine von weiteren copolymerisierbaren Monomeren abgeleiteten Struktureinheiten.

Die Copolymere gemäß Komponente B sind thermoplastisch.

Die Herstellung der Copolymere gemäß Komponente B enthaltend Struktureinheiten abgeleitet von Methylmethacrylat und Glycidylmethacrylat ist dem Fachmann bekannt und erfolgt bevorzugt durch radikalisch initiierte Polymerisation der entsprechenden Monomere, insbesondere durch Emulsions-, Suspensions-, Lösungs- oder Massepolymerisation.

Bei der Lösungspolymerisation, welche bevorzugt in aprotischen Lösungsmitteln, beispielsweise optional halogensubstituierten aliphatischen oder aromatischen Kohlenwasserstoffen als Lösungsmittel ausgeführt wird, sind bevorzugt solche Bedingungen einzuhalten, die eine Hydrolyse der Epoxidgruppen zumindest weitgehend vermeiden. Geeignete und bevorzugte Bedingungen hierfür sind beispielsweise niedrige Gehalte an protischen Lösungsmitteln wie Wasser, Alkoholen, Säuren oder Basen und Arbeiten in Lösungsmitteln aus der Gruppe der organischen Kohlenwasserstoffe, die gegenüber Epoxidgruppen inert sind, wie z.B. Toluol, Ethylbenzol, Xylol, hochsiedende Aliphaten, chlorierte aromatische Kohlewasserstoffe wie Mono-, Di- Tri- oder Tetrachlorbenzole, chlorierte aliphatische Kohlenwasserstoffe wie Dichlormethan oder Chloroform, Ketone wie Methylethylketon, Ester oder Ether.

Durch Zusatz von Reglern, vor allem von Schwefelreglern, insbesondere von Mercaptanen, können die Molekulargewichte der Komponente B bei der radikalischen Polymerisation so eingestellt werden, dass das erfindungsgemäße gewichtsgemittelte Molekulargewicht M_{w} resultiert.

### Komponente C

Als Komponente C können eine oder mehrere Polymeradditive, Prozesshilfsstoffe und/oder weitere polymere Komponenten verschieden von A und B in der Zusammensetzung enthalten sein, bevorzugt ausgewählt aus der Gruppe bestehend aus Flammschutzmitteln, Antidrippingmitteln, Flammschutzsynergisten, Rauchinhibitoren, Gleit- und Entformungsmitteln, Nukleiermitteln, polymere und nichtpolymere Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, Schlagzähigkeitsmodifikatoren (sowohl mit als auch ohne Kern-Schale-Struktur), polymere Blendpartnern, Katalysatoren, Füll- und Verstärkungsstoffen sowie Farbstoffen und Pigmenten.

Die Auswahl und Menge der Komponente C erfolgt so, dass die Einflüsse auf mechanische Eigenschaften und Transparenz der aus den Formmassen hergestellten Formkörpern möglichst gering sind, das heißt so, dass der Zusatz der Komponente C der Lösung der erfindungsgemäßen Aufgabe nicht entgegensteht.

Wenn die Komponente C eingesetzt wird, so wird diese in einem Anteil von maximal 20 Gew.-%, bezogen auf die Zusammensetzung, eingesetzt. Dieser Anteil ist dann die Summe aller als Komponente C eingesetzten Polymeradditive, Prozesshilfsstoffe und polymeren Komponenten.

Dabei werden Antidrippingmittel, Flammschutzsynergisten, Rauchinhibitoren, Gleit- und Entformungsmittel, Nukleierungsmittel, nichtpolymere Antistatika, Leitfähigkeitsadditive und Stabilisatoren bevorzugt jeweils in einem Anteil von 0,1 bis 1 Gew.-% und in Summe bevorzugt in einem Anteil von 0,1 bis 3 Gew.-%, bezogen auf die Zusammensetzung verwendet.

Werden Flammschutzmittel verwendet, so werden davon bevorzugt 1 bis 15 Gew.-%, bezogen auf die Zusammensetzung, verwendet.

Werden Fließfähigkeitspromotoren, polymere Antistatika und Phasenverträglichkeitsvermittler eingesetzt, so ist der verwendete Anteil jeweils bevorzugt 1 bis 10 Gew.-% und in Summe bevorzugt 1 bis 15 Gew.-%, bezogen auf die Zusammensetzung.

Werden Schlagzähmodifikatoren oder polymere Blendparter eingesetzt, so ist der verwendete Anteil in Summe bevorzugt 1 bis 18 Gew.-%, bezogen auf die Zusammensetzung.

Werden Farbstoffe oder Pigmente eingesetzt, so ist der verwendete Anteil bevorzugt 0,1 bis 10 Gew.-%, bezogen auf die Zusammensetzung.

In einer bevorzugten Ausführungsform werden anorganische Pigmente mit einem Anteil von maximal in Summe 3 Gew.-%, besonders bevorzugt von maximal in Summe 1,5 Gew.-%, weiter bevorzugt von maximal 0,5 Gew.-%, jeweils bezogen auf die Zusammensetzung verwendet. In der am meisten bevorzugten Ausführungsform werden keine anorganischen Pigmente als Bestandteil der Komponente C eingesetzt.

Werden Füll- und Verstärkungsstoffe eingesetzt, so ist der verwendete Anteil bevorzugt 3 bis 10 Gew.-%, bezogen auf die Zusammensetzung.

In einer bevorzugten Ausführungsform werden keine Füll- und Verstärkungsstoffe eingesetzt.

In bevorzugter Ausführungsform wird mindestens ein Polymeradditiv ausgewählt aus der Gruppe bestehend aus Gleit- und Entformungsmitteln, Stabilisatoren, Fließfähigkeitspromotoren, Phasenverträglichkeitsvermittlern, Schlagzähigkeitsmodifikatoren, weiteren polymeren Blendpartnern und Farbstoffen eingesetzt.

In bevorzugter Ausführungsform wird als Entformungsmittel Pentaerythrittetrastearat eingesetzt.

In bevorzugter Ausführungsform wird als Stabilisator mindestens ein Vertreter ausgewählt aus der Gruppe bestehend aus sterisch gehinderten Phenolen, organischen Phosphiten und Schwefel-basierten Co-Stabilisatoren eingesetzt.

In besonders bevorzugter Ausführungsform wird als Stabilisator mindestens einen Vertreter ausgewählt aus der Gruppe bestehend aus Octadecyl-3-(3,5-di-tert-butyl-4-hydroxyphenyl)propionat und Tris(2,4-di-tert-butylphenyl)phosphit eingesetzt.

In einer besonders bevorzugten Ausführungsform wird als Bestandteil der Komponente C ein Metallacetylacetonat eingesetzt. Beispiele von geeigneten Metallacetylacetonaten sind Aluminium(III)-Acetylacetonat, Ni(II)-Acetylacetonat, Fe(III)-Acetylacetonat, Zn-Acetylacetonat, Zr(IV)-Acetylacetonat, La(III)-Acetylacetonat und Sa(III)-Acetylacetonat. Es können auch Mischungen mehrerer Metallacetylacetonate eingesetzt werden. Besonders bevorzugt kommt Zirkonium(IV)-Acetylacetonat als Metallacetylacetonat zum Einsatz. Die Metallacetylacetonate werden bevorzugt in einer Menge von in Summe 0,01 bis 0,2 Gew.-%, besonders bevorzugt von in Summe 0,02 bis 0,15 Gew.-%, am meisten bevorzugt in einer Menge von in Summe 0,03 bis 0,1 Gew.-%, jeweils bezogen auf die Zusammensetzung, eingesetzt.

### Herstellung von Formmassen und Formkörpern aus den erfindungsgemäßen Zusammensetzungen

Aus den erfindungsgemäßen Zusammensetzungen können thermoplastische Formmassen hergestellt werden.

Die erfindungsgemäßen thermoplastischen Formmassen können beispielsweise hergestellt werden, indem man die jeweiligen Bestandteile der Zusammensetzungen bei Temperaturen von 200°C bis 320°C, bevorzugt bei 240 bis 300°C, besonders bevorzugt bei 250 bis 270 °C miteinander vermischt.

Gegenstand der Erfindung ist auch ein entsprechendes Verfahren zur Herstellung der erfindungsgemäßen Formmassen.

Das Verfahren umfasst die Schritte
(i) Aufschmelzen der Bestandteile der Zusammensetzung durch Einbringen thermischer Energie und/oder mechanischer Scherung,
(ii) Vermischen und Dispergieren der verschiedenen Komponenten der Zusammensetzung mit- bzw. ineinander,
(iii) Verfestigen der Schmelze durch Abkühlen,
(iv) Granulieren des verfestigten aus den Schritten (i) - (iii) resultierenden Polymerblends.

Die Verweilzeit der Komponenten bei den oben genannten Temperaturen liegt bevorzugt in einem Bereich von 15 Sekunden bis 30 Minuten, weiter bevorzugt 30 Sekunden bis 20 Minuten. Bei Verwendung von Extrudern oder kontinuierlichen Co-Knetern als Compoundieraggregat beträgt die Verweilzeit bevorzugt 15 Sekunden bis 5 Minuten, besonders bevorzugt 30 Sekunden bis 2 Minuten.

Nach Schritt ii) kann auch ein Entgasen der vorliegenden Zusammensetzung durch Anlegen eines Unterdrucks erfolgen. Als Absolutdruck wird bevorzugt ein Druck von maximal 400 mbar, weiter bevorzugt von maximal 200 mbar, besonders bevorzugt von maximal 100 mbar eingestellt.

Das Vermischen kann in üblichen Aggregaten geschehen, wie beispielsweise in Einwellenextrudern, gleichläufigen oder gegenläufige Doppelwellenextrudern, Planetwalzenextrudern, Innenknetern oder kontinuierlichen oder diskontinuierlichen Co-Knetern. Darin werden die Zusammensetzungen zu Formmassen schmelzcompoundiert oder schmelzextrudiert. Dieser Prozess wird im Rahmen dieser Anmeldung allgemein als Compoundieren bezeichnet. Unter Formmasse wird also das Produkt verstanden, das erhaltend wird, wenn die Bestandteile der Zusammensetzung schmelzcompoundiert und schmelzextrudiert werden. Eine solche Formmasse ist ein weiterer Gegenstand der vorliegenden Erfindung.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Bei der Durchführung des oben beschriebenen Verfahrens werden in einer bevorzugten Ausführungsform die Epoxy-Gruppen in den vom Glycidylmethacrylat abgeleiteten Struktureinheiten in Komponente B teilweise oder vollständig in einer chemischen Reaktion umgesetzt. Die Umsetzung kann über eine Bestimmung des Epoxidgehalts gemessen gemäß ASTM D1652-11 (Version von 2011) in Dichlormethan als Lösungsmittel nachgewiesen werden.

Bei der Durchführung des oben beschriebenen Verfahrens erfolgt bevorzugt eine chemische Kopplung der Komponente A oder eines Teils der Komponente A an die Komponente B oder einen Teil der Komponente B unter Bildung eines PC-PMMA-Copolymers. Im Allgemeinen handelt es sich bei dem Copolymer aus der Umsetzung der Polymere A und B um ein Blockcopolymer oder Pfropfcopolymer.

Es ist weiterhin bevorzugt, dass die im Schritt i) eingesetzte Mischung enthaltend Komponenten A, B und optional C einen Restfeuchtegehalt bestimmt durch Karl-Fischer Titration von 0,01 bis 0,50 Gew.-%, weiter bevorzugt von 0,07 bis 0,20 Gew.-%, jeweils bezogen auf die Summe an A, B und C, aufweist. Bei zu hoher Feuchtigkeit besteht die Gefahr von unerwünscht hohem Molekulargewichtsabbau.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Besonders eignen sich die erfindungsgemäßen Formmassen zur Verarbeitung in Extrusions-, Blasform- und Tiefziehverfahren.

Es ist auch möglich, die Bestandteile der Zusammensetzungen direkt in den Förderextruder einer Spritzgussmaschine zu dosieren, die erfindungsgemäße Formmasse dabei in dem Förderextruder herzustellen und durch entsprechenden Austrag der Formmasse in eine Spritzgussform direkt zu Formkörper zu verarbeiten (Compoundierungs- oder Reaktivcompoundierungsspritzguss).

Ein solches Verfahren ist ein weiterer Gegenstand der vorliegenden Erfindung und umfasst die folgenden Schritte:
(i) Dosieren der Bestandteile der erfindungsgemäßen Zusammensetzung in den Förderextruder einer Spritzgussmaschine,
(ii) Aufschmelzen der Bestandteile der erfindungsgemäßen Zusammensetzung durch Einbringen thermischer Energie und/oder mechanischer Scherung,
(iii) Fördern der Schmelze zur Austragsstelle des Extruders,
(iv) Austrag der Schmelze aus dem Förderextruder in eine Spritzgussform,
(v) Abkühlen und Verfestigen der Schmelze in der Spritzgussform unter Ausbildung eines Formkörpers,
(vi) Entnahme des Formkörpers aus der Spritzgussform.

In bevorzugter Ausführungsform dieses Verfahrens beträgt die Verweilzeit der Schmelze im Förderextruder mindestens zwei, weiter bevorzugt mindestens fünf, besonders bevorzugt mindestens zehn Minuten.

In bevorzugter Ausführungsform dieses Verfahrens beträgt die Verweilzeit der Schmelze im Förderextruder 2 bis 30 Minuten, weiter bevorzugt 5 bis 20 Minuten, besonders bevorzugt 7 bis 15 Minuten.

In bevorzugter Ausführungsform erfolgen die Verfahrensschritte (iii) und (iv) unter Scherung. Dieses kann beispielsweise erreicht werden durch eine hohe Schneckendrehzahl bei der Schmelzeförderung im Schritt (iii) und/oder durch eine geeignete Schneckenkonfiguration der Förderschnecke, beispielsweise durch den Einsatz von Knetelementen, sowie durch geeignet enge Geometrie der Schmelzeaustrittsdüse im Schritt (iv).

Ein weiterer Gegenstand der vorliegenden Erfindung betrifft somit die Verwendung einer erfindungsgemäßen Zusammensetzung oder einer erfindungsgemäßen Formmasse zur Herstellung von Formkörpern, sowie ferner auch einen Formkörper, der aus einer erfindungsgemäßen Zusammensetzung oder aus einer erfindungsgemäßen Formmasse erhältlich ist oder eine solche Formmasse enthält.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Die erfindungsgemäßen Zusammensetzungen und Formmassen eignen sich aufgrund ihrer besonderen technischen Eigenschaften bevorzugt zur Herstellung von mit Licht im sichtbaren Wellenlängenbereich, beispielsweise einer LED-Lichtquelle, durchleuchtbaren Formkörpern für Beleuchtungsanwendungen im Automobilbereich, im Bausektor und im Elektronikbereich. Insbesondere eignen sie sich zur Herstellung durchleuchtbarer Formteile für den Einsatz im Automobilinnenraum wie beispielsweise Instrumententafelträger oder Zierblenden oder in automobilen Karosserieanwendungen, welche beispielsweise einer ambienten Beleuchtung oder bedarfsgerecht schaltbaren Funktionsanzeige (beispielsweise Tag-/Nacht-Differenzierung) dienen sollen.

Im Folgenden werden weitere Ausführungsformen der vorliegenden Erfindung aufgeführt.
1. Zusammensetzung zur Herstellung einer thermoplastischen Formmasse enthaltend
   A) mindestens ein aromatisches Polycarbonat und/oder aromatisches Polyestercarbonat enthaltend mindestens 500 Gew.-ppm phenolische OH-Gruppen, wobei das gewichtsgemittelte Molekulargewicht M_{w}, ermittelt per Gelpermeationschromatographie bei Raumtemperatur in Dichlormethan als Lösungsmittel mit einem BPA-Polycarbonat-Standard, der Komponente A im Bereich von 15000 bis 40000 g/mol liegt,
   B) mindestens ein Copolymer enthaltend Struktureinheiten abgeleitet von Methylmethacrylat und 0,3 bis 15 Gew.-%, bezogen auf die Komponente B, Struktureinheiten abgeleitet von Glycidylmethacrylat (GMA), wobei die Komponente B ein gewichtsgemitteltes Molekulargewicht M_{w}, ermittelt mittels Gelpermeationschromatographie bei Raumtemperatur in Tetrahydrofuran als Lösungsmittel mit einem Polystyrol-Standard, von 20000 bis 200000 g/mol aufweist,
      wobei in der Komponente B das Verhältnis von M_{w} in kg/mol zum Gewichtsanteil an von Glycidylmethacrylat abgeleiteten Struktureinheiten in Gew.-% im Bereich von 2 bis 100 liegt,
   wobei das Gewichtsverhältnis der Komponenten A und Komponente B im Bereich von 30:70 bis 90:10 liegt.
2. Zusammensetzung gemäß Ausführungsform 1, wobei in der Komponente B das Verhältnis von M_{w} in kg/mol zum Gewichtsanteil an von Glycidylmethacrylat abgeleiteten Struktureinheiten in Gew.-% im Bereich von 5 bis 80 liegt.
3. Zusammensetzung gemäß Ausführungsform 1, wobei in der Komponente B das Verhältnis von M_{w} in kg/mol zum Gewichtsanteil an von Glycidylmethacrylat abgeleiteten Struktureinheiten in Gew.-% im Bereich von 5 bis 50 liegt.
3. Zusammensetzung gemäß Ausführungsform 1, wobei in der Komponente B das Verhältnis von M_{w} in kg/mol zum Gewichtsanteil an von Glycidylmethacrylat abgeleiteten Struktureinheiten in Gew.-% im Bereich von 8 bis 30 liegt.
4. Zusammensetzung gemäß einer der vorhergehenden Ausführungsformen, wobei das Produkt aus der phenolischen OH-Menge in Gew.-ppm, die über die Komponente A in die Zusammensetzung eingetragen wird, und der Menge an von Glycidylmethacrylat abgeleiteten Struktureinheiten in Gew.-%, die über die Komponente B in die Zusammensetzung eingetragen wird, größer als 300 ist.
5. Zusammensetzung gemäß einer der vorhergehenden Ausführungsformen, wobei die Komponente A ein gewichtsgemitteltes Molekulargewicht M_{w}, gemessen mittels Gelpermeationschromatographie bei Raumtemperatur in Methylenchlorid als Lösungsmittel mit einem BPA-Polycarbonat-Standard, von 18000 bis 35000 g/mol aufweist.
6. Zusammensetzung gemäß einer der vorhergehenden Ausführungsformen, wobei die Komponente A ein gewichtsgemitteltes Molekulargewicht M_{w}, gemessen mittels Gelpermeationschromatographie bei Raumtemperatur in Methylenchlorid als Lösungsmittel mit einem BPA-Polycarbonat-Standard, von 19000 bis 30000 g/mol aufweist.
7. Zusammensetzung gemäß einer der vorhergehenden Ausführungsformen, wobei die Komponente A ein gewichtsgemitteltes Molekulargewicht M_{w}, gemessen mittels Gelpermeationschromatographie bei Raumtemperatur in Methylenchlorid als Lösungsmittel mit einem BPA-Polycarbonat-Standard, von 20000 bis 28000 g/mol aufweist.
8. Zusammensetzung gemäß einer der vorhergehenden Ausführungsformen, wobei die Komponente B 0,5 bis 10 Gew.-% Struktureinheiten abgeleitet von Glycidylmethacrylat enthält.
9. Zusammensetzung gemäß einer der vorhergehenden Ausführungsformen, wobei die Komponente B 0,8 bis 9 Gew.-% Struktureinheiten abgeleitet von Glycidylmethacrylat enthält.
10. Zusammensetzung gemäß einer der vorhergehenden Ausführungsformen, wobei die Komponente B 1 bis 8 Gew.-% Struktureinheiten abgeleitet von Glycidylmethacrylat enthält.
11. Zusammensetzung gemäß einer der vorhergehenden Ausführungsformen, wobei die Komponente B ein gewichtsgemitteltes Molekulargewicht M_{w}, gemessen mittels Gelpermeationschromatographie bei Raumtemperatur in Tetrahydrofuran als Lösungsmittel mit einem Polystyrol-Standard, von 30000 bis 150000 g/mol aufweist.
12. Zusammensetzung gemäß einer der vorhergehenden Ausführungsformen, wobei die Komponente B ein gewichtsgemitteltes Molekulargewicht M_{w}, gemessen mittels Gelpermeationschromatographie bei Raumtemperatur in Tetrahydrofuran als Lösungsmittel mit einem Polystyrol-Standard, von 30000 bis 100000 g/mol aufweist.
13. Zusammensetzung gemäß einer der vorhergehenden Ausführungsformen, wobei die Komponente B ein gewichtsgemitteltes Molekulargewicht M_{w}, gemessen mittels Gelpermeationschromatographie bei Raumtemperatur in Tetrahydrofuran als Lösungsmittel mit einem Polystyrol-Standard, von 50000 bis 80000 g/mol aufweist.
14. Zusammensetzung gemäß einer der vorhergehenden Ausführungsformen, wobei die Komponente A einen Anteil an phenolischen OH Gruppen von 500 Gew.-ppm bis 3000 Gew.-ppm aufweist.
15. Zusammensetzung gemäß einer der vorhergehenden Ausführungsformen, wobei die Komponente A einen Anteil an phenolischen OH Gruppen von mindestens 1000 Gew.-ppm aufweist.
16. Zusammensetzung gemäß einer der vorhergehenden Ausführungsformen, wobei die Komponente A einen Anteil an phenolischen OH Gruppen von mindestens 1500 Gew.-ppm aufweist.
17. Zusammensetzung gemäß einer der vorhergehenden Ausführungsformen, wobei die Komponente A einen Anteil an phenolischen OH Gruppen von 1500 Gew.-ppm bis 3000 Gew.-ppm aufweist.
18. Zusammensetzung gemäß einer der vorhergehenden Ausführungsformen, wobei die Komponente A einen Anteil an phenolischen OH Gruppen von mindestens 1800 Gew.-ppm aufweist.
19. Zusammensetzung gemäß einer der vorhergehenden Ausführungsformen, wobei die Komponente A einen Anteil an phenolischen OH Gruppen von 1800 Gew.-ppm bis 2800 Gew.-ppm aufweist.
20. Zusammensetzung gemäß einer der vorhergehenden Ausführungsformen, wobei als Komponente A ein aromatisches Polycarbonat hergestellt im Schmelzepolymerisationsverfahren zum Einsatz kommt.
21. Zusammensetzung gemäß Ausführungsform 20, wobei bei der Herstellung der Komponente A das molare Verhältnis an Diphenylcarbonat zu Diphenolen im Bereich 1,00 bis 1,07 eingestellt wird.
22. Zusammensetzung gemäß Ausführungsform 20, wobei bei der Herstellung der Komponente A das molare Verhältnis an Diphenylcarbonat zu Diphenolen im Bereich 1,02 bis 1,04 eingestellt wird.
23. Zusammensetzung gemäß einer der vorhergehenden Ausführungsformen, wobei als Komponente A ausschließlich lineares aromatisches Polycarbonat auf Basis von ausschließlich Bisphenol-A eingesetzt wird.
24. Zusammensetzung gemäß einem der vorhergehenden Ausführungsformen bestehend aus
   30 bis 90 Gew.-% der Komponente A,
   10 bis 70 Gew.-% der Komponenten B,
   als Komponente C 0 bis 20 Gew.-% Polymeradditive, Prozesshilfsstoffe und/oder von den Komponenten A und B verschiedene Polymere,
   wobei die Gew.-% der Komponenten A bis C so gewählt sind, dass sie sich zu 100 Gew.-% summieren
25. Zusammensetzung gemäß einem der vorhergehenden Ausführungsformen bestehend aus 45 bis 85 Gew.-%, der Komponente A,
   14 bis 54 Gew.-% der Komponenten B,
   als Komponente C 0,01 bis 5 Gew.-% Polymeradditive, Prozesshilfsstoffe und/oder von den Komponenten A und B verschiedene Polymere,
   wobei die Gew.-% der Komponenten A bis C so gewählt sind, dass sie sich zu 100 Gew.-% summieren
26. Zusammensetzung gemäß einem der vorhergehenden Ausführungsformen bestehend aus
   48 bis 82 Gew.-%, der Komponente A,
   17 bis 41 Gew.-% der Komponenten B,
   als Komponente C 0,02 bis 1 Gew.-% Polymeradditive, Prozesshilfsstoffe und/oder von den Komponenten A und B verschiedene Polymere,
   wobei die Gew.-% der Komponenten A bis C so gewählt sind, dass sie sich zu 100 Gew.-% summieren.
27. Zusammensetzung gemäß einer der Ausführungsformen 24 bis 26, wobei die Komponente C ein Metall-Acetylacetonat enthält.
28. Zusammensetzung gemäß Ausführungsform 27, wobei das Metall-Acetylacetonat mindestens eine Verbindung ausgewählt aus der Gruppe bestehend aus Aluminium(III)-Acetylacetonat, Ni(II)-Acetylacetonat, Fe(III)-Acetylacetonat, Zn-Acetylacetonat, Zr(IV)-Acetylacetonat, La(III)-Acetylacetonat und Sa(III)-Acetylacetonat ist.
29. Zusammensetzung gemäß einer der Ausführungsformen 27 und 28, wobei das Metall-Acetylacetonat Zr(IV)-Acetylacetonat ist.
30. Zusammensetzung gemäß einer der Ausführungsformen 27 bis 29, wobei Komponente C das Metall-Acetylacetonat in einer Menge von 0,01 bis 0,2 Gew.-%, bezogen auf die Zusammensetzung, enthält.
31. Zusammensetzung gemäß einer der Ausführungsformen 27 bis 30, wobei das Metall-Acetylacetonat Zr(IV)-Acetylacetonat ist und in einer Menge von 0,02 bis 0,15 Gew.-%, bezogen auf die Zusammensetzung, eingesetzt wird.
32. Zusammensetzung gemäß einer der Ausführungsformen 27 bis 31, wobei das Metall-Acetylacetonat Zr(IV)-Acetylacetonat ist und in einer Menge von 0,03 bis 0,1 Gew.-%, bezogen auf die Zusammensetzung, eingesetzt wird.
33. Zusammensetzung gemäß einer der vorhergehenden Ausführungsformen, wobei in der Komponente B das Verhältnis von M_{w} in kg/mol zum Gewichtsanteil an von Glycidylmethacrylat abgeleiteten Struktureinheiten in Gew.-% von >50 bis 100 ist.
34. Verfahren zur Herstellung einer thermoplastischen Formmasse bestehend aus den Schritten
   (i) Aufschmelzen der Bestandteile einer Zusammensetzung gemäß einer der vorhergehenden Ausführungsformen durch Einbringen thermischer Energie und/oder mechanischer Scherung,
   (ii) Vermischen und Dispergieren der verschiedenen Komponenten der Zusammensetzung mit- bzw. ineinander,
   (iii) Verfestigen der Schmelze durch Abkühlen,
   (iv) Granulieren des verfestigten aus den Schritten (i) - (iii) resultierenden Polymerblends,
   wobei der Schritt (ii) in einer Compoundierungsmaschine ausgewählt aus der Gruppe bestehend aus Einwellenextrudern, gleichläufigen oder gegenläufigen Doppelwellenextrudern, Planetwalzenextrudern, Innenknetern oder Co-Knetern erfolgt.
35. Verfahren gemäß Ausführungsform 34, wobei in dem Prozess die Epoxy-Gruppen aus Komponente B teilweise oder vollständig in einer chemischen Reaktion umgesetzt werden.
36. Verfahren gemäß Ausführungsform 34 oder 35, wobei in dem Prozess eine chemische Kopplung der Komponente A oder eines Teils der Komponente A an die Komponente B oder einen Teil der Komponente B erfolgt.
37. Thermoplastische Formmasse erhältlich in einem Verfahren gemäß einer der Ausführungsformen 34 bis 36.
38. Formmasse gemäß Ausführungsform 37, wobei die Formmasse einen Gesamtlichttransmissionsgrad gemessen gemäß ISO 13468-1 (Version von 2019) an einem Formkörper mit einer Dicke von 1 mm von mindestens 35 % gemessen aufweist.
39. Formmasse gemäß Ausführungsform 37, wobei die Formmasse einen Gesamtlichttransmissionsgrad gemessen gemäß ISO 13468-1 (Version von 2019) an einem Formkörper mit einer Dicke von 1 mm von mindestens 50 % gemessen aufweist.
40. Verwendung einer thermoplastischen Formmasse gemäß einer der Ausführungsformen 37 bis 39 zur Herstellung von Formkörpern.
41. Formkörper enthaltend eine thermoplastische Formmasse gemäß einer der Ausführungsformen 37 bis 39.
42. Formkörper bestehend aus einer thermoplastischen Formmasse gemäß einer der Ausführungsformen 37 bis 39, wobei der Formkörper eine Biegefestigkeit gemessen nach ISO 178 (Version von 2019) von mindestens 100 MPa aufweist.
43. Formkörper bestehend aus einer thermoplastischen Formmasse gemäß einer der Ausführungsformen 37 bis 39, wobei der Formkörper eine Kratzfestigkeit gemessen als Bleistifthärte in Anlehnung an das Verfahren von Wolff-Wilbom von mindestens 2H aufweist.
44. Verfahren zur Herstellung eines Formkörpers, umfassend die Schritte
   (i) Dosieren der Bestandteile eine Zusammensetzung gemäß einer der Ausführungsformen 1 bis 33 in den Förderextruder einer Spritzgussmaschine,
   (ii) Aufschmelzen der Bestandteile der Zusammensetzung durch Einbringen thermischer Energie und/oder mechanischer Scherung,
   (iii) Fördern der Schmelze zur Austragsstelle des Extruders,
   (iv) Austrag der Schmelze aus dem Förderextruder in eine Spritzgussform
   (v) Abkühlen und Verfestigen der Schmelze in der Spritzgussform unter Ausbildung eines Formkörpers,
   (vi) Entnahme des Formkörpers aus der Spritzgussform.
45. Verfahren gemäß Ausführungsform 44, wobei die Verweilzeit der Schmelze im Förderextruder mindestens 5 Minuten beträgt.
46. Verfahren gemäß Ausführungsform 44, wobei die Verweilzeit der Schmelze im Förderextruder mindestens 7 bis 15 Minuten beträgt.
47. Verfahren gemäß einer der Ausführungsformen 44 bis 46, wobei die Verfahrensschritte (iii) und (iv) unter Scherung erfolgen.
48. Formkörper gemäß einer der Ausführungsformen 41 bis 43 oder erhältlich mittels eines Verfahrens gemäß einer der Ausführungsformen 44 bis 47, wobei es sich um einen mit Licht im sichtbaren Wellenlängenbereich, beispielsweise einer LED-Lichtquelle, durchleuchtbaren Formkörpern für Beleuchtungsanwendungen im Automobilbereich, im Bausektor und im Elektronikbereich handelt.
49. Formkörper gemäß Ausführungsform 48, wobei es sich um einen Instrumententafelträger oder um eine Zierblende oder um einen Formkörper für eine automobile Karosserieanwendung handelt und wobei der Formkörper einer ambienten Beleuchtung oder bedarfsgerecht schaltbaren Funktionsanzeige (beispielsweise Tag-/Nacht-Differenzierung) dienen soll.

### Beispiele

### Zusammensetzungen

### Komponente A1

Bisphenol A-basiertes Polycarbonat, hergestellt im Phasengrenzflächenverfahren, mit einem gewichtsgemittelten Molekulargewicht M_{w} von 25000 g/mol, gemessen bei Raumtemperatur in Methylenchlorid als Lösungsmittel mit einem FTIR-Detektor bei einer Wellenzahl von 1775 cm⁻¹ und gegen einen BPA-Polycarbonat-Kalibrierungsstandard. Komponente A1 enthält <100 Gew.-ppm phenolische OH-Gruppen, gemessen mittels ¹H NMR-Spektroskopie.

### Komponente A2

Bisphenol A-basiertes Polycarbonat, hergestellt im Schmelzepolymerisationsverfahren, mit einem gewichtsgemittelten Molekulargewicht M_{w} von 24000 g/mol (Mₙ von 11000 g/mol), gemessen bei Raumtemperatur in Methylenchlorid als Lösungsmittel mit einem FTIR-Detektor bei einer Wellenzahl von 1775 cm⁻¹ und gegen einen BPA-Polycarbonat-Kalibrierungsstandard. Komponente A2 enthält 2200 Gew.-ppm phenolische OH-Gruppen, gemessen mittels ¹H NMR-Spektroskopie. Bei der Herstellung wurde ein molares Verhältnis an Diphenylcarbonat zu Bisphenol-A von 1,02 eingesetzt.

### Komponente A3

Bisphenol A-basiertes Polycarbonat, hergestellt im Phasengrenzflächenverfahren, mit einem gewichtsgemittelten Molekulargewicht M_{w} von 20000 g/mol, gemessen bei Raumtemperatur in Methylenchlorid als Lösungsmittel mit einem FTIR-Detektor bei einer Wellenzahl von 1775 cm⁻¹ und gegen einen BPA-Polycarbonat-Kalibrierungsstandard. Komponente A3 enthält <100 Gew.-ppm phenolische OH-Gruppen, gemessen mittels ¹H NMR-Spektroskopie.

### Komponente A4

Bisphenol A-basiertes Polycarbonat, hergestellt im Schmelzepolymerisationsverfahren, mit einem gewichtsgemittelten Molekulargewicht M_{w} von 20000 g/mol (Mₙ von 9200 g/mol), gemessen bei Raumtemperatur in Methylenchlorid als Lösungsmittel mit einem FTIR-Detektor bei einer Wellenzahl von 1775 cm⁻¹ und gegen einen BPA-Polycarbonat-Kalibrierungsstandard. Komponente A4 enthält 2700 Gew.-ppm phenolische OH-Gruppen, gemessen mittels ¹H NMR-Spektroskopie. Bei der Herstellung wurde ein molares Verhältnis an Diphenylcarbonat zu Bisphenol-A von 1,02 eingesetzt.

### Komponente B1

Polymethylmethacrylat mit einem gewichtsgemittelten Molekulargewicht M_{w} von 58000 g/mol, gemessen mittels Gelpermeationschromatographie bei Raumtemperatur in Tetrahydrofuran als Lösungsmittel mit einem Brechnungsindex-Detektor und gegen einen Polystyrol-Kalibrierungsstandard.

### Komponente B2

Statistisches Polymethylmethacrylat-Glycidylmethacrylat-Copolymerisat mit einem Gehalt an von Glycidylmethacrylat abgeleiteten Struktureinheiten von 1 Gew.-% und mit einem gewichtsgemittelten Molekulargewicht M_{w} von 34000 g/mol, gemessen mittels Gelpermeationschromatographie bei Raumtemperatur in Tetrahydrofuran als Lösungsmittel mit einem Brechnungsindex-Detektor und gegen einen Polystyrol-Kalibrierungsstandard.

### Komponente B3

Statistisches Polymethylmethacrylat-Glycidylmethacrylat-Copolymerisat mit einem Gehalt an von Glycidylmethacrylat abgeleiteten Struktureinheiten von 1 Gew.-% und mit einem gewichtsgemittelten Molekulargewicht M_{w} von 60000 g/mol, gemessen mittels Gelpermeationschromatographie bei Raumtemperatur in Tetrahydrofuran als Lösungsmittel mit einem Brechnungsindex-Detektor und gegen einen Polystyrol-Kalibrierungsstandard.

### Komponente B4

Statistisches Polymethylmethacrylat-Glycidylmethacrylat-Copolymerisat mit einem Gehalt an von Glycidylmethacrylat abgeleiteten Struktureinheiten von 8 Gew.-% und mit einem gewichtsgemittelten Molekulargewicht M_{w} von 68000 g/mol, gemessen mittels Gelpermeationschromatographie bei Raumtemperatur in Tetrahydrofuran als Lösungsmittel mit einem Brechnungsindex-Detektor und gegen einen Polystyrol-Kalibrierungsstandard.

### Komponente C1

Catana^{™} CAA 2950: Zirkonium(IV)-Acetylacetonat-Katalysator (Sachem Inc., Austin, Texas, USA)

### Herstellung der thermoplastischen Formmassen

Die für die Herstellung der thermoplastischen Formmassen eingesetzten Rohstoffe wurden vor der Compoundierung unter Vakuum bei 60 °C für mind. 7 h getrocknet. Beide polymeren Komponenten A und B wurden bei der Compoundierung als Pulver eingesetzt, welche aus Granulaten mittels Kryovermahlung hergestellt wurden.

Die thermoplastischen Formmassen aus den in Tabelle 1 dargestellten Zusammensetzungen wurden mit einer Verweilzeit von 15 min bei einer Schmelzetemperatur von 260°C und einer Drehzahl von 100 min⁻¹ auf einem diskontinuierlichen Mikrocompounder vom Typ DSM-Xplore^{®} MC15 (Xplore Instruments BV, Sittard, Niederlande) aus zuvor hergestellten Pulvermischungen der Komponenten A, B und optional C produziert. Die Ansatzgröße betrug 15 g, woraus etwa 7 g für die weitere Charakterisierung der Compounds verwertbares Material erhalten wurden.

Die thermoplastischen Formmassen aus den in Tabelle 2 dargestellten Zusammensetzungen wurden auf einem kontinuierlichen Doppelschnecken-Extruder vom Typ Process 11 (Thermofischer Scientific, Karlsruhe, Deutschland) mit einer Dispergierschneckenkonfiguration mit drei Mischzonen bei einer Schmelzetemperatur von 260°C, einem Durchsatz von etwa 300 g/h, einer Drehzahl von 200 min-1 und mit einer Verweilzeit von ca. 90 s compoundiert und nach Austritt durch eine Düsenplatte der Schmelzestrang abgekühlt, dadurch verfestigt und anschließend granuliert. Auch für diese Compoundierungen wurden zunächst Pulvermischungen der Komponenten A bis C hergestellt und diese gleichmäßig über einen volumetrischen Dosierer in die Einlaufzone des Doppelwellenextruders dosiert. Um eine möglichst homogene Verteilung der sehr geringen Mengen an Komponente C in diesen Pulvermischungen zu realisieren, wurde Komponente C als 2 Gew.-%ige Lösung in Ethanol auf die Pulvermischung der Komponenten A und B möglichst gleichmäßig aufgetragen, anschließend die so hergestellte Mischung bei 60°C im Umluftofen getempert und nachfolgend durch Anlegen von Vakuum bei 60°C über Nacht getrocknet (das heißt das Ethanol wieder abgezogen).

### Herstellung der Prüfkörper

Aus den thermoplastischen Formmassen, welche aus den Zusammensetzungen gemäß Tabelle 1 hergestellt wurden, wurden mittels einer Laborthermopresse der Firma P/O/Weber (Remshalden, Deutschland) bei einer Temperatur von 260°C, einem Druck von 60 bar und einer Pressdauer von insgesamt 4 min Rundplatten mit einem Durchmesser von 18 mm und einer Dicke von 1 mm für die Transmissionsmessungen, nicht normgerechte Mini-Flachstab-Prüfkörper der Abmessung 30 mm x 6 mm x 1 mm für die 3-Punkt-Biegeversuche hergestellt.

Aus den thermoplastischen Formmassen, welche aus den Zusammensetzungen gemäß Tabelle 2 hergestellt wurden, wurden auf einer Spritzgießmaschine vom Typ Arburg 470 H 1000-170 der Fa. Arburg GmbH + Co KG (Loßburg, Deutschland) Rechteckplatten der Abmessung 80 mm x 80 mm x 1 mm, sowie Prüfstäbe der Abmessung 80 mm x 10 mm x 4 mm bei einer Schmelzetemperatur von 270°C, einer Werkzeugtemperatur von 60°C und einem Einspritzdruck von 2000 bar hergestellt. Bei den gleichen Bedingungen wurden für die Zugversuche nicht normgerechte Schulterstab-Prüfkörper hergestellt mit den Dimensionen l₃=120 mm (Gesamtlänge), l₂=83 mm (Entfernung zwischen den breiten parallelen Teilen), l₁=70 mm (Länge des engen parallelen Teils), h=3 mm (Dicke), b₁=8 mm (Breite des engen Teils) und b₂=16 mm (Breite an den Enden), wobei die Bezeichnungen der Dimensionen der Probekörper dieselbe Bedeutung wie in DIN EN ISO 527-2 (Version von 1996) haben.

### Anwendungstechnische Prüfungen

Die Zug-Dehnungs-Eigenschaften (Zugfestigkeit und E-Modul) wurden im Zugversuch in Anlehnung an ISO 527-1 (Version von 2019) an nicht den normgerechten Schulterstab-Prüfkörper bei Raumtemperatur ermittelt. In Anlehnung an ISO 527-1 bedeutet, dass die nicht normgerechten Schulterstab-Prüfkörper verwendet wurden.

Die Bestimmung von Biegefestigkeit, Biegemodul, Bruchdehnung bzw. - im Falle der Prüfungen an den nicht normgerechten Prüfkörpern - der Durchbiegungslänge beim Bruchversagen erfolgte bei Raumtemperatur in 3-Punkt-Biegeversuchen an Prüfstäben der Dimension 30 mm x 6 mm x 1 mm (Tabelle 1) bzw. 80 mm x 10 mm x 4 mm (Tabelle 2). Die Prüfung an den Prüfstäben der Dimension 80 mm x 10 mm x 4 mm (Tabelle 2) erfolgte dabei gemäß ISO 178 (Version von 2019). Die 3-Punkt-Biegeprüfungen an den nicht normgerechten Prüfstäben der Dimension 30 mm x 6 mm x 1 mm (Tabelle 1) wurden mittels eines Prüfgeräts GABO EPLEXOR^{®} 500 N der Firma Netzsch-Gerätebau GmbH (Selb, Deutschland) mit einer Prüfgeschwindigkeit von 5 mm/min durchgeführt.

Als Maß für die Kratzfestigkeit wurde die sogenannte Bleistifthärte ermittelt. Die Messung erfolgte bei Raumtemperatur mittels eines Ritzhärteprüfers vom Typ TriForcePencil Modell 293 der Fa. Erichsen GmbH & Co. KG (Hemer, Deutschland) gemäß Prüfvorschrift des Geräteherstellers in Anlehnung an das Verfahren von Wolff-Wilbom an Prüfplatten der Dimension 80 mm x 80 mm x 1 mm. Die Bleistifte wurden dazu in einem zur Prüfoberfläche geneigten Winkel von 45° in die Messvorrichtung eingespannt und mit einer Prüfkraft von 5 N über die Probekörperoberfläche geschoben. Es wurde mit dem härtesten Bleistift gestartet und die Härte dann sukzessive reduziert. Die Bleistifthärte des Bleistifts, dessen Spitze bei diesem Vorgehen als erstes keinen fühlbaren Kratzer mehr hinterlässt, gilt dabei als die die Kratzfestigkeit der Kunststoffoberfläche charakterisierende Größe.

Die Sonnenmilchbeständigkeit wurde unter Verwendung des Sonnenmilch-Testgemisch-Prüfmittels MB-PM001, welches von der Fa. Thierry Präzisionslackiertechnik GmbH (Stuttgart, Deutschland) bezogen wurde, an Rechteckplatten der Abmessung 80 mm x 80 mm x 1 mm beurteilt. Die Prüfkörper wurden zunächst mit VE-Wasser gereinigt und trockengeblasen, bevor ein Sonnenmilchtropfen der Größe von ca. 7-10 mm Durchmesser auf die Probekörper aufgebracht wurde. Anschließend wurden die derart mit dem Sonnenmilch-Testgemisch beaufschlagten Proben für 6 h bzw. 24 h bei 50 °C gelagert. Danach wurde nach Abkühlen der Prüfkörper auf Raumtemperatur die Sonnenmilch mit einem Tuch vorsichtig vom Prüfkörper entfernt und die Prüfkörper dann abschließend bei Raumtemperatur nochmals für 7 Tage gelagert, bevor sie im Hinblick auf Bruch bzw. auf Trübung gemäß ISO 14782 (Version von 1999) untersucht wurden. Als Kriterium für die Sonnenmilchbeständigkeit gilt dabei zum einen, ob es bei der Sonnenmilchexposition zu einer Rissbildung auf dem Prüfkörper kommt (schlechtestes Verhalten). Bei den Formmassen, bei denen es aufgrund der Sonnenmilchexposition nicht zu einem solchen Rissbildung auf dem Prüfkörper kommt, dient die Änderung der Trübung (das heißt die Differenz der nach und vor Sonnenmilchexposition gemessenen Trübungswerte) als Maß für die Sonnenmilchbeständigkeit, wobei eine geringere Trübungsänderung einer verbesserten Sonnmilchbeständigkeit entspricht.

Die Transparenz der Formmassen wurden an Rundplatten mit einem Durchmesser von 18 mm und einer Dicke von 1 mm (Tabelle 1) bzw. an Rechteckplatten der Abmessung 80 mm x 80 mm x 1 mm (Tabelle 2) bei Raumtemperatur gemäß ISO 13468-1 (Version von 2019) durch Bestimmung des Gesamtlichttransmissionsgrades (im Folgenden synonym als "Transmission" bezeichnet) beurteilt.

**Tabelle 1: Zusammensetzungen und Eigenschaften der daraus hergestellten Formmassen (Formmassen hergestellt im Microcompounder, Prüfkörper hergestellt durch Thermopressen)**

| **Zusammensetzung** | **R1** | **R2** | **R3** | **R4** | **R5** | **R6** | **V7** | **V8** | **V9** | **10** | **11** | **12** | **13** | **14** | **15** | **16** | **V17** | **V18** | **V19** |
|---|---|---|---|---|---|---|---|---|---|---|---|---|---|---|---|---|---|---|---|
| A1 | 100 | | | | | | 80 | | | | | | | | | | 80 | 80 | 80 |
| A2 | | 100 | | | | | | 80 | 50 | 80 | 80 | 80 | 80 | 80 | 50 | 50 | | | |
| B1 | | | 100 | | | | 20 | 20 | 50 | | | | | | | | | | |
| B2 | | | | 100 | | | | | | | | 20 | | | | | 20 | | |
| B3 | | | | | 100 | | | | | 20 | 20 | | | | | | | 20 | |
| B4 | | | | | | 100 | | | | | | | 20 | 20 | 50 | 50 | | | 20 |
| C1 | | | | | | | | | | | 0,05 | | | 0,05 | | 0,05 | | | |

| **Merkmal der Komponente B** | | | | | | | | | | | | | | | | | | | |
|---|---|---|---|---|---|---|---|---|---|---|---|---|---|---|---|---|---|---|---|
| M_{w} [kg/mol] | - | - | 58 | 34 | 60 | 68 | 58 | 58 | 58 | 60 | 60 | 34 | 68 | 68 | 68 | 68 | 34 | 60 | 68 |
| GMA-Struktureinheiten [Gew.-%] | | | 0 | 1 | 1 | 8 | 0 | 0 | 0 | 1 | 1 | 1 | 8 | 8 | 8 | 8 | 1 | 1 | 8 |
| M_{w} [kg/mol] / GMA [Gew.-%] | - | - | ∞ | 34 | 60 | 8,5 | ∞ | ∞ | ∞ | 60 | 60 | 34 | 8,5 | 8,5 | 8,5 | 8,5 | 34 | 60 | 8,5 |

| **Eigenschaften** | | | | | | | | | | | | | | | | | | | |
|---|---|---|---|---|---|---|---|---|---|---|---|---|---|---|---|---|---|---|---|
| Biegefestigkeit [MPa] | 84 | 90 | 86 | n.m. | 34 | 50 | 96 | 100 | 88 | 104 | 107 | 106 | 111 | 128 | 110 | 122 | n.g. | n.g. | n.g. |
| Durchbiegungslänge bei Bruch [mm] | >5,5 | >5,5 | 0,7 | n.m. | <0,3 | <0,3 | >5,5 | >5,5 | 1,3 | >5,5 | >5,5 | >5,5 | >5,5 | >5,5 | >5,5 | >5,5 | n.g. | n.g. | n.g. |
| Transmission [%] | | | | | | | 19 | 27 | 21 | 36 | 70 | 64 | 60 | 52 | 56 | 39 | 17 | 17 | 18 |

| | | | | | | | | | | | | | | | | | | | |
|---|---|---|---|---|---|---|---|---|---|---|---|---|---|---|---|---|---|---|---|
| n.m. = nicht messbar, da im Thermopressverfahren aufgrund zu hoher Materialsprödigkeit keine Prüfkörper hergestellt werden konnten bzw. diese bei dem Versuch zur Entformung aus der Pressform aufgrund hoher Materialsprödigkeit bereits zerbrachen n.g. = nicht gemessen R = Referenzversuch, V = Vergleichsversuch | | | | | | | | | | | | | | | | | | | |

Messapparturbedingt waren Durchbiegungslängen nur bis maximal 5,5 mm messbar. Sofern bei dieser maximal messbaren Durchbiegungslänge kein Bruch beobachtet wurde, wird insofern die Durchbiegungslänge bei Bruch mit ">5,5 mm" angeben.

**Tabelle 2: Zusammensetzungen und Eigenschaften der daraus hergestellten Formmassen (Formmassen hergestellt im Doppelwellenextruder, Prüfkörper hergestellt durch Spritzguss)**

| **Zusammensetzung** | **V20** | **21** | **22** | **23** | **R24** | **R25** |
|---|---|---|---|---|---|---|
| A1 | | | | | 100 | |
| A3 | 80 | | | | | |
| A4 | | 80 | 80 | 80 | | |
| B1 | 20 | | | | | 100 |
| B2 | | 20 | | | | |
| B4 | | | 20 | 20 | | |
| C1 | | | | 0,05 | | |

| **Merkmal der Komponente B** | | | | | | |
|---|---|---|---|---|---|---|
| M_{w} [kg/mol] | 58 | 34 | 68 | 68 | - | 58 |
| GMA-Struktureinheiten [Gew.-%] | 0 | 1 | 8 | 8 | - | 0 |
| M_{w} [kg/mol] / GMA [Gew.-%] | ∞ | 34 | 8,5 | 8,5 | - | ∞ |

| **Eigenschaften** | | | | | | |
|---|---|---|---|---|---|---|
| Biegemodul [MPa] | 2447 | 2567 | 2519 | 2559 | | |
| Biegefestigkeit [MPa] | 98 | 104 | 101 | 101 | | |
| Zugmodul [MPa] | 2586 | 2768 | 2717 | 2797 | | |
| Zugfestigkeit [MPa] | 61 | 66 | 66 | 67 | | |
| Transmission [%] | 26 | 65 | 59 | 65 | | |
| Bleistifthärte | 2H | 2H | 3H | 3H | F | 4H |
| Sonnenmilch-Test (Rissbildung auf Prüfkörper) | ja | nein | nein | nein | nein | |
| Sonnenmilch-Test (Trübungsänderung nach 50°C/6 h) [%] | n.m. | 20 | n.g. | n.g. | 33 | |
| Sonnenmilch-Test (Trübungsänderung nach 50°C/24 h) [%] | n.m. | 34 | n.g. | 29 | 47 | |

| | | | | | | |
|---|---|---|---|---|---|---|
| n.m. = nicht messbar, da der Prüfkörper als Folge der Sonnencreme-Exposition zerbrochen ist. n.g. = nicht gemessen | | | | | | |

Die Daten in Tabelle 1 zeigen, dass die thermoplastischen Formmassen hergestellt aus den erfindungsgemäßen Zusammensetzungen 10 bis 16 eine überraschende, synergistische Erhöhung der Biegefestigkeit sowohl gegenüber den reinen Komponenten A (R2) und B (R4 bis R6), gegenüber nicht reaktiv modifiziertem PC bzw. PMMA (R1 und R3) als auch gegenüber Blends hergestellt aus nicht reaktiv modifiziertem PC und PMMA (V7) gemäß dem Stand der Technik sowie gegenüber Blends hergestellt aus OH-funktionalisiertem PC und nicht reaktiv funktionalisiertem PMMA (V8 und V9) aufweisen.

Die Daten zeigen ebenfalls, dass die thermoplastischen Formmassen hergestellt aus den erfindungsgemäßen Zusammensetzungen eine gegenüber reinem nicht reaktiv modifiziertem PMMA (R3) und PMMA-Polymeren gemäß Komponente B (R4-R6) höhere Biegebruchdehnung aufweisen.

Weiterhin zeigen die Daten in Tabelle 1, dass die thermoplastischen Formmassen hergestellt aus den erfindungsgemäßen Zusammensetzungen außerdem eine höhere Transparenz (Transmission) aufweisen als analoge nicht erfindungsgemäße Formmassen hergestellt aus Zusammensetzungen enthaltend nicht reaktiv funktionalisierte PC und/oder PMMA (vergleiche die erfindungsgemäßen Beispiele 10, 12, 13 und 15 mit V7 bis V9 und V17 bis V19).

Die Daten in Tabelle 1 zeigen weiterhin, dass solche Formmassen hergestellt aus Zusammensetzungen enthaltend eine Komponente B mit einem niedrigeren Verhältnis M_{w} [kg/mol]/GMA-Gehalt [Gew.-%] bei Abwesenheit eines Katalysators eine höhere Transparenz und Biegefestigkeit aufweisen, als analoge Formmassen hergestellt aus Zusammensetzungen enthaltend eine Komponente B mit einem höheren Verhältnis M_{w} [kg/mol]/GMA-Gehalt [Gew.-%] von beispielsweise 60 (vergleiche Beispiel 10 mit den bevorzugten Beispielen 12 und 13).

Andererseits zeigen die Daten in Tabelle 1 aber auch, dass dieser technische Nachteil der erfindungsgemäßen Formmassen hergestellt aus Zusammensetzungen enthaltend eine Komponente B mit einem höheren Verhältnis M_{w} [kg/mol]/GMA-Gehalt [Gew.-%] von beispielsweise 60 überwunden werden kann durch den Einsatz von Zirkonium(IV)acetylacetonat als Komponente C (vergleiche Beispiele 10 und 11) und dadurch bevorzugte Formmassen mit besonders hoher Transmission resultieren.

Die Daten in Tabelle 1 zeigen weiterhin, dass bei Verwendung einer Komponente B mit einem sehr hohen GMA-Gehalt von beispielsweise 8 Gew.-%, bezogen auf die Komponente B, der Zusatz von Zirkoniumacetylacetonat als Komponente C zwar zu einer weiteren Erhöhung der Biegefestigkeit, jedoch bei gleichzeitig geringfügig abnehmender Transmission resultiert (vergleiche Beispiele 13 und 15 mit Beispielen 14 und 16). Je nachdem, welches Zieleigenschaftsprofil genau angestrebt wird, kann somit der Einsatz von Zirkoniumacetylacetonat in solchen Formmassen hergestellt aus Zusammensetzungen enthaltend eine Komponente B mit einem sehr hohen GMA-Gehalt für eine Produktentwicklung entweder technisch bevorzugt oder weniger geeignet sein.

Die Daten in Tabelle 2 zeigen, dass ähnliche Effekte, wie sie zuvor aus den Daten der Tabelle 1 abgeleitet wurden, auch in Formmassen und daraus hergestellten Prüfkörpern realisiert werden können, wenn die Formmassen auf einem gegenläufigen Doppelwellenextruder und die Prüfkörper in einem Spritzgussprozess, wie sie üblicherweise in der industriellen Fertigung solcher Formmassen bzw. Formteile zum Einsatz kommen, hergestellt werden. Damit ist auch die gute Herstell- und Verarbeitungsstabilität der erfindungsgemäßen Formmassen erkennbar.

Weiterhin zeigen die Daten in Tabelle 2, dass die erfindungsgemäßen Formmassen gegenüber analogen Formmassen gemäß dem Stand der Technik, die aus Zusammensetzungen enthaltend nicht reaktives PC und PMMA hergestellt wurden, auch im Zugversuch eine überraschende Verbesserung der Zugfestigkeit und sowohl im Zug- als auch im Biegeversuch eine überraschende Verbesserung des Moduls aufweisen. Ferner zeigen Sie eine gegenüber Polycarbonat und zum Teil sogar überraschend auch gegenüber analogen PC+PMMA-Formmassen gemäß dem Stand der Technik, die aus nicht reaktivem PC und PMMA hergestellt wurden, verbesserte Kratzfestigkeit (Bleistifthärte), welche nahezu auf dem Niveau des reinen PMMA liegt, selbst dann, wenn die PMMA-Komponente B nur mit 20 Gew.-% in den PC+PMMA-Zusammensetzungen zum Einsatz kommt und damit nicht als Matrixkomponente des Polymerblends vorliegt (vergleiche Beispiel 22 mit Vergleichsbeispiel V20 bzw. mit den Referenzbeispielen R24 und R25).

Weiterhin zeigen die Daten in Tabelle 2, dass die erfindungsgemäßen Formmassen eine gegenüber sowohl reinem Polycarbonat (Referenzbeispiel R24) als auch gegenüber analogen PC+PMMA-Formmassen gemäß dem Stand der Technik, die aus Zusammensetzungen enthaltend nicht reaktives PC und PMMA hergestellt wurden (Vergleichsbeispiel 20), verbesserte Sonnenmilchbeständigkeit aufweisen.

## Patentansprüche

1. Zusammensetzung zur Herstellung einer thermoplastischen Formmasse enthaltend
A) mindestens ein aromatisches Polycarbonat und/oder aromatisches Polyestercarbonat enthaltend mindestens 500 Gew.-ppm phenolische OH-Gruppen, wobei das gewichtsgemittelte Molekulargewicht M_{w}, ermittelt per Gelpermeationschromatographie bei Raumtemperatur in Dichlormethan als Lösungsmittel mit einem BPA-Polycarbonat-Standard, der Komponente A im Bereich von 15000 bis 40000 g/mol liegt,
B) mindestens ein Copolymer enthaltend Struktureinheiten abgeleitet von Methylmethacrylat und 0,3 bis 15 Gew.-%, bezogen auf die Komponente B, Struktureinheiten abgeleitet von Glycidylmethacrylat, wobei die Komponente B ein gewichtsgemitteltes Molekulargewicht M_{w}, ermittelt mittels Gelpermeationschromatographie bei Raumtemperatur in Tetrahydrofuran als Lösungsmittel mit einem Polystyrol-Standard, von 20000 bis 200000 g/mol aufweist,
wobei in der Komponente B das Verhältnis von M_{w} in kg/mol zum Gewichtsanteil an von Glycidylmethacrylat abgeleiteten Struktureinheiten in Gew.-% im Bereich von 2 bis 100 liegt,
wobei das Gewichtsverhältnis der Komponente A und Komponente B im Bereich von 30:70 bis 90:10 liegt.

2. Zusammensetzung gemäß Anspruch 1, wobei in der Komponente B das Verhältnis von M_{w} in kg/mol zum Gewichtsanteil an von Glycidylmethacrylat abgeleiteten Struktureinheiten in Gew.-% im Bereich von 5 bis 50 liegt.

3. Zusammensetzung gemäß einem der vorhergehenden Ansprüche bestehend aus
30 bis 90 Gew.-%, der Komponente A,
10 bis 70 Gew.-% der Komponente B und
als Komponente C 0 bis 20 Gew.-% Polymeradditive, Prozesshilfsstoffe und/oder von den Komponenten A und B verschiedene Polymere,
wobei die Gew.-% der Komponenten A bis C so gewählt sind, dass sie sich zu 100 Gew.-% summieren.

4. Zusammensetzung gemäß Anspruch 3, wobei die Komponente C ein Metall-Acetylacetonat enthält.

5. Zusammensetzung gemäß Anspruch 4, wobei das Metall-Acetylacetonat Zirkonium(IV)-Acetylacetonat ist und in einer Menge von 0,01 bis 0,2 Gew.-%, bezogen auf die Zusammensetzung, eingesetzt wird.

6. Zusammensetzung gemäß einem der vorhergehenden Ansprüche 4 bis 5, wobei in der Komponente B das Verhältnis von M_{w} in kg/mol zum Gewichtsanteil an von Glycidylmethacrylat abgeleiteten Struktureinheiten in Gew.-% im Bereich von >50 bis 100 ist.

7. Zusammensetzung gemäß einem der vorhergehenden Ansprüche, wobei die Komponente B ein gewichtsgemitteltes Molekulargewicht M_{w}, gemessen mittels Gelpermeationschromatographie bei Raumtemperatur in Tetrahydrofuran als Lösungsmittel mit einem Polystyrol-Standard, von 50000 bis 80000 g/mol aufweist.

8. Zusammensetzung gemäß einem der vorhergehenden Ansprüche, wobei die Komponente A einen Anteil an phenolischen OH Gruppen von 1500 bis 3000 Gew.-ppm aufweist.

9. Verfahren zur Herstellung einer thermoplastischen Formmasse umfassend die Schritte
(i) Aufschmelzen der Bestandteile einer Zusammensetzung gemäß einer der vorhergehenden Ansprüche durch Einbringen thermischer Energie und/oder mechanischer Scherung,
(ii) Vermischen und Dispergieren der verschiedenen Komponenten der Zusammensetzung mit- bzw. ineinander,
(iii) Verfestigen der Schmelze durch Abkühlen,
(iv) Granulieren des verfestigten aus den Schritten (i) - (iii) resultierenden Polymerblends,
wobei der Schritt (ii) in einer Compoundierungsmaschine ausgewählt aus der Gruppe bestehend aus Einwellenextrudern, gleichläufigen oder gegenläufigen Doppelwellenextrudern, Planetwalzenextrudern, Innenknetern oder Co-Knetern erfolgt.

10. Verfahren gemäß Anspruch 9, wobei in dem Prozess die Epoxy-Gruppen aus Komponente B teilweise oder vollständig in einer chemischen Reaktion umgesetzt werden.

11. Verfahren gemäß einer der Ansprüche 9 oder 10, wobei in dem Prozess eine chemische Kopplung der Komponente A oder eines Teils der Komponente A an die Komponente B oder einen Teil der Komponente B erfolgt.

12. Thermoplastische Formmasse erhältlich in einem Verfahren gemäß einer der Ansprüche 9 bis 11.

13. Verwendung einer thermoplastischen Formmasse gemäß Anspruch 12 zur Herstellung von Formkörpern.

14. Formkörper enthaltend eine thermoplastische Formmasse gemäß Anspruch 12.

15. Verfahren zur Herstellung eines Formkörpers, umfassend die Schritte
(i) Dosieren der Bestandteile einer Zusammensetzung gemäß einem der Ansprüche 1 bis 8 in d en Förderextruder einer Spritzgussmaschine,
(ii) Aufschmelzen der Bestandteile der Zusammensetzung durch Einbringen thermischer Energie und/oder mechanischer Scherung,
(iii) Fördern der Schmelze zur Austragsstelle des Extruders,
(iv) Austrag der Schmelze aus dem Förderextruder in eine Spritzgussform,
(v) Abkühlen und Verfestigen der Schmelze in der Spritzgussform unter Ausbildung eines Formkörpers,
(vi) Entnahme des Formkörpers aus der Spritzgussform.
